# EUROPEAN PATENT APPLICATION

(11) **EP 4 744 975 A1**
(43) Date of publication of application: **20.05.2026**
(21) Application number: 25212908.5
(22) Date of filing: 03.11.2025
(51) Int. Cl.: B60R 25/24, H04W 4/40, G07C 9/00

(54) **ELECTRONIC KEY SYSTEM FOR VEHICLE**

(30) Priority: 14.11.2024 JP 2024198942
(71) Applicant: Suzuki Motor Corporation, Shizuoka 432-8611 (JP)
(72) Inventor: NAKAO, Taichi, HAMAMATSU-SHI, 432-8611 (JP); KASUYA, Tomohiro, HAMAMATSU-SHI, 432-8611 (JP)
(74) Representative: Plasseraud IP

(57) **Abstract**

An electronic key system 1 includes a mobile terminal M that outputs a key operation signal corresponding with a key permission of a digital key, a vehicle key R portable by a driver, a power supply switch 201 that is provided at a driver's seat and implements a power supply state transition operation on the vehicle under authentication of either the digital key or the vehicle key R, and a controller 101 that turns on or off a power supply of the vehicle in response to the power supply state transition operation or in response to receiving the key operation signal. When the driver turns on the power supply using the power supply switch 201, the mobile terminal M is prohibited from turning the power supply on or off.

## Description

### BACKGROUND OF THE INVENTION

### Field of the Invention

The present invention relates to an electronic key system for a vehicle.

### Description of the Related Art

There is a technique of displaying a button for locking and unlocking a door of a vehicle on a screen of a smartphone assigned with a digital key and locking or unlocking the door in response to an operation of the button by an occupant.

### Citation List

### Patent Literature

Patent Literature 1: Japanese Patent No. 6001176

### SUMMARY OF THE INVENTION

Assume a situation where a driver with a vehicle key, such as a remote key, and an occupant with a smartphone assigned with a digital key are present in a vehicle. In this situation, if the occupant can shut down the power supply with the permission of the digital key after the driver starts the vehicle under authentication of the vehicle key, the shutdown occurs at an unexpected timing for the driver, which raises safety concerns.

In view of such circumstances, an object of the present invention is to provide an electronic key system for a vehicle that prevents a power supply from being turned on or off at an unexpected timing for a driver and contributes to improvement of the safety.

To attain the object described above, an electronic key system for a vehicle according to one aspect of the present invention includes a mobile terminal that outputs a key operation signal corresponding with a key permission of a digital key, a vehicle key portable by a driver, a power supply switch that is provided at a driver's seat and is configured to implement a power supply state transition operation on the vehicle under authentication of either the digital key or the vehicle key, and a controller that turns on or off a power supply of the vehicle in response to the power supply state transition operation or in response to receiving the key operation signal.

In this aspect, when the driver turns on the power supply using the power supply switch, the mobile terminal is prohibited from turning the power supply on or off.

The mobile terminal may be prohibited from turning on or off by prohibiting the mobile terminal from outputting a key operation signal that turns on or off the power supply or prohibiting the controller from receiving the key operation signal.

The mobile terminal may be configured to obtain authorization concerning turning on or off of the power supply.

The mobile terminal may be configured to output the key operation signal that turns on or off the power supply only when the mobile terminal has obtained the authorization.

The mobile terminal may be configured such that, after the mobile terminal has obtained the authorization, when the driver turns on the power supply using the power supply switch, the mobile terminal is prohibited from outputting the key operation signal upon cancellation of the authorization.

The mobile terminal may be further configured to output a key operation signal that unlocks or locks a door of the vehicle, and obtain the authorization when the mobile terminal has output the key operation signal that unlocks the door.

The mobile terminal may be configured to release the authorization when the door is locked after the power supply is turned off.

The controller may be further configured to start the vehicle in response to the power supply being turned on.

The mobile terminal may be configured to display a screen for key operation.

The mobile terminal may be configured to output the key operation signal according to an operation on the screen.

The mobile terminal may be prohibited from displaying a screen involved with turning off of the power supply when the driver turns on the power supply using the power supply switch.

The power supply switch may be a push start switch.

The mobile terminal may be prohibited from turning on or off the power supply when both the mobile terminal and the vehicle key are located in a key detection range relating to the authentication at a time of push start with the power supply switch.

After the power supply is turned on, when the driver turns off the power supply using the power supply switch, the mobile terminal may be permitted to turn on or off the power supply.

According to an aspect of the present invention, in a situation where a mobile terminal assigned with a digital key and a vehicle key are present in a vehicle, when a driver turns on a power supply of the vehicle with a power supply switch, the mobile terminal is prohibited from turning on or off the power supply. Thus, during driving, the power supply can be prevented from being turned on or off regardless of the intention of the driver or at an unexpected timing for the driver because of the passenger operating the mobile terminal to transmit a key operation signal.

### BRIEF DESCRIPTION OF THE DRAWINGS

Fig. 1 is a schematic diagram showing a general configuration of an electronic key system for a vehicle according to an embodiment of the present invention;
Fig. 2 is a schematic diagram showing an internal configuration of a computing unit (controller) of the electronic key system shown in Fig. 1;
Fig. 3 is a flowchart showing a flow of a digital key control (when a power supply is in an on state);
Fig. 4 is a flowchart showing a flow of a digital key control (when a power supply is in an off state);
Fig. 5 is a schematic diagram showing radio wave reception areas (an accessible area A1 and a start area A2) of a mobile terminal;
Fig. 6 is a state transition diagram conceptually showing switching between home screens;
Fig. 7 is a schematic diagram showing home screens 1 and 2;
Fig. 8 is a schematic diagram showing a home screen 3 (before and after start of the vehicle); and
Fig. 9 is a schematic diagram showing a power supply alert screen and an authorization-suspended screen.

### DETAILED DESCRIPTION OF THE PREFERRED EMBODIMENT

In the following, an embodiment of the present invention will be described with reference to the drawings.

In the following description, an "occupant" refers to a person who is or will be sitting in a driver's seat (referred to also as a "driver") or a person who is or will be sitting in a seat other than the driver's seat, and the occupant who is or will be sitting in a seat other than the driver's seat is referred also to a "passenger". The seats other than the driver's seat include seats next to and behind the driver's seat, the seat next to the driver's seat may be referred to as a "passenger seat", and a seat behind the driver's seat may be referred to as a "rear seat". That is, a "passenger" may be an occupant who is or will be sitting in the passenger seat or an occupant who is or will be sitting in a rear seat.

### (General Configuration of Electronic Key System)

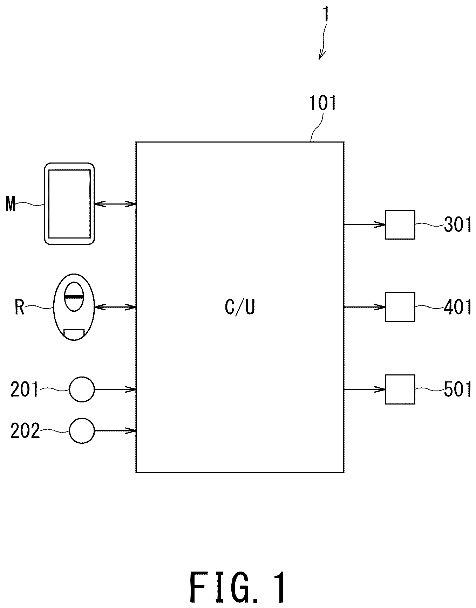

Fig. 1 is a schematic diagram showing a general configuration of an electronic key system 1 for a vehicle (referred to simply as an "electronic key system", hereinafter) according to an embodiment of the present invention. The electronic key system 1 provides a so-called key-less entry system that does not rely on any physical key that is inserted into a keyhole.

The electronic key system 1 includes a mobile terminal M, a vehicle key R, a digital key controller (referred to simply as a "controller", hereinafter) 101 and a power supply switch 201 as main components.

In addition to the components described above, the electronic key system 1 includes a brake switch 202 as an auxiliary component.

The mobile terminal M forms an input unit of the electronic key system 1 along with the vehicle key R and the power supply switch 201. The mobile terminal M can operate as a digital key and outputs a key operation signal corresponding with a key permission of the digital key.

As described in detail later, in this embodiment, the occupant carrying the mobile terminal M can operate a button displayed on a screen of the mobile terminal M to control locking and unlocking of a door of a vehicle, turning on and off of a power supply, and start and stop of the vehicle. To this end, the mobile terminal M outputs a key operation signal corresponding to a button operation by the occupant to the controller 101.

The mobile terminal M downloads a computer program of an application (referred to as a "digital key application", hereinafter) for setting or assignment of a digital key from a remote server (not shown). The mobile terminal M can operate as the digital key once the digital key application is installed in the mobile terminal M.

Here, the term "digital key" refers to a function assigned to the mobile terminal M. In the following description, however, the mobile terminal M that has the digital key application installed therein and can operate as a digital key may also be referred to as a "digital key", for the sake of convenience.

In this embodiment, a plurality of key permissions of the digital key can be set in the mobile terminal M.

Permissions that are set in the mobile terminal M include a door locking permission concerning locking and unlocking of a door of a vehicle (which may be referred to simply as a "door", hereinafter), a power supply state transition permission concerning start and stop of a power supply unit mounted on a vehicle, that is, concerning turning on and off of a power supply, and a vehicle start permission concerning start and stop of a drive unit involved with production of a driving force for running of the vehicle (referred to simply as a "drive unit", hereinafter).

The door locking permission, the power supply state transition permission and the vehicle start permission may be referred to also as a "first key permission", a "second key permission" and a "third key permission", respectively.

In practice, when there are a plurality of mobile terminals M, different key permissions may be set in different mobile terminals M.

Specifically, the power supply state transition permission and the vehicle start permission may be set in only one or some of the plurality of mobile terminals M, while the door locking permission is set in all the plurality of mobile terminals M.

For example, of a plurality of occupants, the door locking permission is set in the mobile terminals M of the driver and all the passengers, while the power supply state transition permission and the vehicle start permission are set in only the mobile terminal(s) M of the driver or some passengers. In other words, the mobile terminal(s) M of the driver or some passengers serves as a digital key with all key permissions set therein, while the mobile terminals M of the other occupants serve as a digital key with only the door locking permission set therein.

The mobile terminal M has a screen capable of displaying an operation button concerning an operation based on the key permission. The screen of the mobile terminal M is divided into a plurality of regions, and an operation button corresponding with the key permission can be displayed in each of the plurality of regions. The screen of the mobile terminal M is a touch-sensitive screen, for example, and the mobile terminal M outputs a key operation signal in response to the occupant operating (tapping, for example) the operation button displayed in a predetermined region of the screen with the occupant's finger or the like.

The mobile terminal M may be a smartphone.

The vehicle key R is a remote key that is portable by the occupant and is provided with an operation button concerning locking and unlocking of a door. The occupant (such as the driver) with the vehicle key R can lock the door by pushing the door locking button provided on the vehicle key R and can release the lock of the door (that is, unlock the door) by pushing the door unlocking button.

The vehicle key R further has an authentication function concerning the power supply state transition or start of the vehicle.

The vehicle key R may be a smart key or a keyless entry system, rather than the remote key.

In this embodiment, the smart key is an electronic key that has no physical button used to lock and unlock a door and can release the door lock in response to an occupant with the smart key touching the door knob or pulling the knob. The keyless entry system is a system that includes both an operation button for locking and unlocking a door of a vehicle and a physical key that is inserted into a keyhole for power supply state transition or start of the vehicle.

The power supply switch 201 is provided at a position within reach of the driver sitting in the driver's seat, such as a position close to a steering column. The power supply switch 201 includes a button operable by the driver and outputs an on signal to the controller 101 when the button is pushed by the driver. In this embodiment, the power supply switch 201 is a push start button.

The brake switch 202 is provided on a brake pedal or a moving component associated therewith and is normally in the off state. The brake switch 202 is turned on and outputs an on signal to the controller 101 when the brake pedal is pressed by the driver.

The controller 101 forms a computing unit of the electronic key system 1. The controller 101 receives output signals from the mobile terminal M, the vehicle key R, the power supply switch 201 and the brake switch 202, processes the signals according to a previously stored control program, and outputs instruction signals, which are results of processing, to a power supply unit 301, a drive unit 401 and a door lock unit 501. An internal configuration of the controller 101 will be described in detail later.

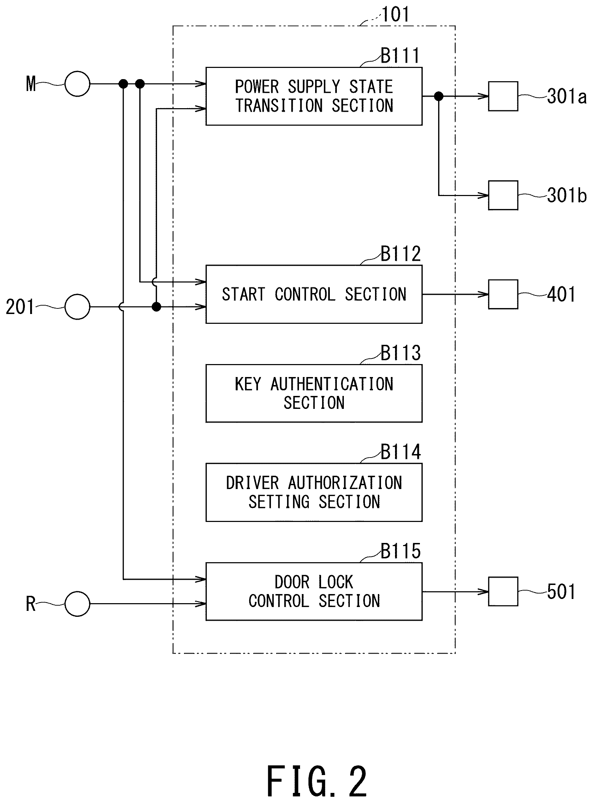

In this embodiment, as power supply units 301 of the vehicle, an accessory power supply unit 301a and a system power supply unit 301b are provided (Fig. 2). The accessory power supply unit 301a provides a power supply for car audio equipment such as a radio, a navigation system or an instrument on an instrument panel. The system power supply unit 301b is referred to also as a power-on power supply unit and provides a power supply for the drive unit 401.

The driver with the digital key (mobile terminal M) or vehicle key R can turn on the accessory power supply unit 301a by pushing the power supply switch 201 without pressing the brake pedal. In this case, the controller 101 outputs an on signal as an instruction signal to the accessory power supply unit 301a.

On the other hand, the driver with the digital key or vehicle key R can turn on both the accessory power supply unit 301a and the system power supply unit 301b and activate the drive unit 401 by pushing the power supply switch 201 while pressing the brake pedal. In this case, the controller 101 outputs an on signal as an instruction signal to each of the accessory power supply unit 301a and the system power supply unit 301b and outputs an activation signal to the drive unit 401. By turning on the system power supply unit 301b, the drive unit 401 can be activated to start the vehicle.

When the controller 101 receives an output signal that indicates to lock the door from the mobile terminal M or vehicle key R, the controller 101 further outputs a door locking signal as an instruction signal to the door lock unit 501. On the other hand, when the controller 101 receives an output signal that indicates to unlock the door, the controller 101 outputs a door lock releasing signal as an instruction signal to the door lock unit 501.

The door lock unit 501 includes a door lock actuator. The door lock unit 501 makes the door lock actuator operate in a door locking direction to lock the door when the door lock unit 501 receives the door locking signal, and makes the door lock actuator in a door unlocking direction to unlock the door when the door lock unit 501 receives the door unlocking signal.

### (Internal Configuration of Computing Unit)

The controller 101 is formed by a microcomputer including a central processing unit (CPU), an input/output interface and various storage devices, such as a ROM and a RAM, and is mounted on a vehicle as an electronic control unit.

The controller 101 includes a power supply state transition section B111, a start control section B112, a key authentication section B113, a driver authorization setting section B114 and a door lock control section B115. Functions of these components are implemented on a software basis by the controller 101 reading a control program stored in the storage device and operating according to an instruction indicated by the control program.

When the power supply state transition section B111 receives a key operation signal from the mobile terminal M or an output signal from the power supply switch 201 and receives a key operation signal or output signal that indicates to turn on the power supply, the power supply state transition section B112 outputs an on signal to both, or only the accessory power supply unit 301a, of the accessory power supply unit 301a and the system power supply unit 301b.

The output of the on signal from the power supply state transition section B111 can be implemented not only by operating the power supply switch 201 under the authentication of the vehicle key R, but also by operating the power supply switch 201 under the authentication of the digital key (mobile terminal M) after the digital key is authenticated. That is, the output of the on signal from the power supply state transition section B111 can be implemented by the driver pushing the power supply switch 201 in a state where the driver carries the vehicle key R or places the mobile terminal M on a tray (smartphone tray). Furthermore, based on the power supply state transition permission of the digital key, the output of the on signal can also be implemented by an operation performed via the screen of the mobile terminal M.

The authentication of the vehicle key R or the digital key is implemented by the key authentication section B113 described later.

When the start control section B112 receives a key operation signal from the mobile terminal M or an output signal from the power supply switch 201 and receives a key operation signal or output signal that indicates to activate the drive unit 401, the start control section B113 outputs an on signal to the drive unit 401. The start control section B112 outputs the on signal when the driver operates the mobile terminal M or presses the power supply switch 201 while pressing the brake pedal.

When the key authentication section B113 receives a key operation signal or output signal that indicates to turn on the power supply from the mobile terminal M or the power supply switch 201, the key authentication section B114 grants authentication to the vehicle key R or the digital key in the procedure described below.

For example, the vehicle key R is provided with a receiver and a transmitter, and when the receiver detects a weak radio wave transmitted from the controller 101, the transmitter transmits a response radio wave back to the controller 101. The controller 101 receives the response radio wave and determines whether registration of the vehicle key R is completed. The controller 101 grants authentication of the vehicle key R on the condition that the registration is completed. Authentication of the digital key can be granted in the same procedure.

The driver authorization setting section B114 grants driver authorization to a mobile terminal M that satisfies a prescribed condition.

In this embodiment, driver authorization is granted to the mobile terminal M that has output a key operation signal that indicates to release the door lock on the condition that the power supply state transition permission and the vehicle start permission are set in the mobile terminal M among the plurality of key permissions. Once driver authorization is granted to the mobile terminal M, the mobile terminal M can exercise the power supply state transition permission and the vehicle start permission and can perform operations corresponding with these permissions. In this way, according to this embodiment, only one of the plurality of mobile terminals M can obtain driver authorization and can be operated as a digital key to turn on the power supply and start the vehicle.

When the door lock control section B115 receives an output signal that indicates to lock or unlock the door from the vehicle key R, the door lock control section B115 outputs a door locking signal or a door unlocking signal as an instruction signal to the door lock unit 501.

When the door lock control section B115 receives a key operation signal based on a door locking permission, specifically, a key operation signal that indicates to lock or unlock the door, from the mobile terminal M, the door lock control section B115 further outputs a door locking signal or a door unlocking signal to the door lock unit 501.

### (Screens of Mobile Terminal and Switching between Screens)

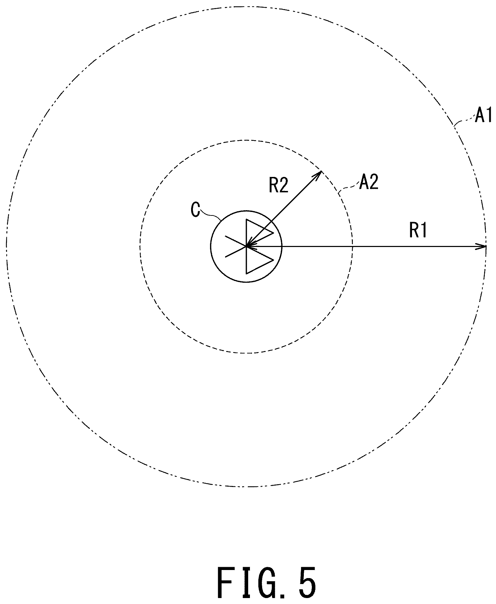

A home screen displayed on the mobile terminal M when the digital key application is activated and switching between home screens will be described with reference to Figs. 5 to 9.

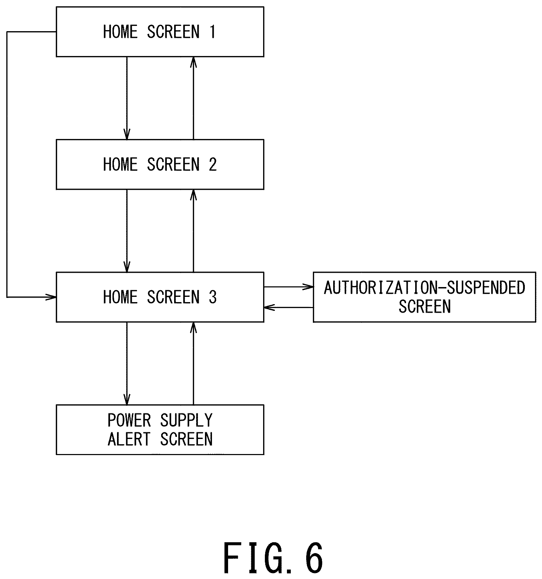

Fig. 5 is a schematic diagram showing a radio wave reception area of the mobile terminal M, and Fig. 6 is a state transition diagram conceptually showing switching between home screens.

In this embodiment, the radio wave reception area of the mobile terminal M is set with respect to the radio communication device C installed in the vehicle and includes the accessible area A1, which is set in a circular range having a relatively large radius R1 from the radio communication device C, and the start area A2, which is set in a circular range having a radius R2 smaller than the radius R1 from the radio communication device C.

The radio communication device C is disposed in the vehicle, for example, close to a wireless charger (not shown) installed beside the driver's seat. The radio communication device C and the wireless charger can be disposed close to each other in a smartphone tray provided on a console box in the vehicle.

The radio communication device C can communicate by radio with the mobile terminal M via Bluetooth Low Energy (BLE) connection, for example.

In this embodiment, the accessible area A1 is set in a range of a radius R1 of the order of several meters from the radio communication device C, and the start area A2 is set in a range of a radius R2 of the order of 1 m from the radio communication device C.

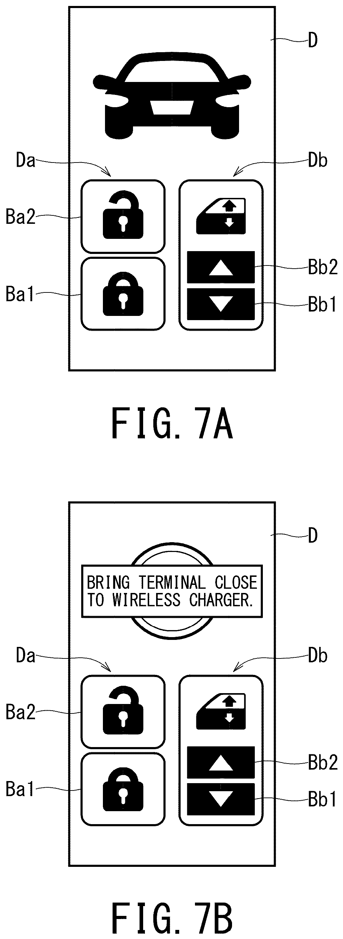

When the driver carrying the mobile terminal M comes close to the vehicle from outside the radio wave reception area and the mobile terminal M enters the accessible area A1, a home screen 1 is displayed on the mobile terminal M. Fig. 7(a) illustrates the home screen 1.

On the home screen 1, in a first region Da set on a left side in the lower half of the screen viewed from the front of the display D, operation buttons concerning an operation based on the door locking permission, specifically, operation buttons Ba1 and Ba2 concerning locking and unlocking of the door are displayed. In a second region Db set on a right side, operation buttons Bb1 and Bb2 concerning opening and closing of the window are displayed.

The driver can lock the door by operating a door locking button Ba1 displayed in a lower part of the first region Da, and can release the door lock by operating a door unlocking button Ba2 displayed in an upper part of the first region Da.

The driver further can open the window beside the seat in which the driver is sitting, that is, the window beside the driver's seat by operating a window opening button Bb1 displayed as a down arrow in the second region Db, and can close the window beside the driver's seat by operating a window closing button Bb2 displayed as an up arrow in the second region Db.

The driver performs operations of the various buttons Ba1, Ba2, Bb1 and Bb2 by tapping on the screen, for example.

When the driver operates the door unlocking button Ba2 to release the door lock, the screen displayed on the mobile terminal M changes from the home screen 1 to a home screen 2. Fig. 7(b) illustrates the home screen 2.

Here, once the door lock is released, the mobile terminal M obtains driver authorization and can exercise the power supply state transition permission and the vehicle start permission.

On the home screen 2, in the region in the lower half of the screen viewed from the front of the display D, that is, in the first and second regions Da and Db, the same operation buttons Ba1, Ba2, Bb1 and Bb2 as those on the home screen 1 are displayed. In addition, on the home screen 2, in the region in the upper half of the screen, a message to request that the mobile terminal M should be brought close to the radio communication device C is displayed. For example, the message is as follows:
"BRING TERMINAL CLOSE TO WIRELESS CHARGER."

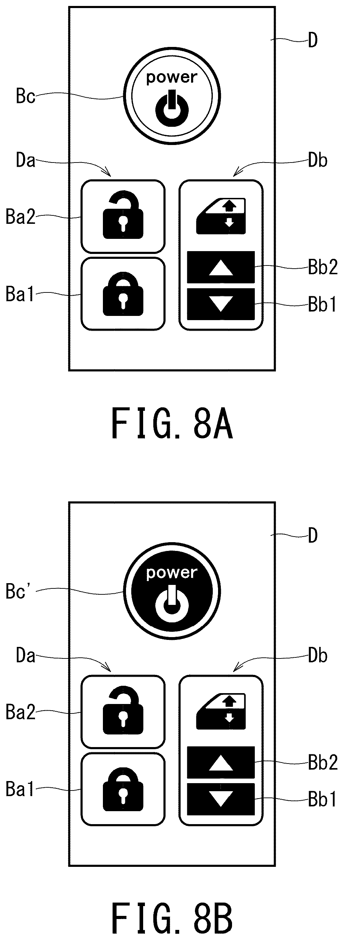

When the driver opens the door and gets in the vehicle, the mobile terminal M enters the start area A2, and the screen displayed on the mobile terminal M changes from the home screen 2 to a home screen 3. Fig. 8(a) illustrates the home screen 3.

On the home screen 3, in addition to the various operation buttons Ba1, Ba2, Bb1 and Bb2, an operation button concerning an operation based on the power supply state transition permission and the vehicle start permission, that is, an operation button Bc concerning turning on and off of the power supply and starting of the vehicle (referred to as a "power button", hereinafter) is displayed in the region in the upper half of the screen viewed from the front of the display D.

As described above, the driver can activate the accessory power supply unit 301a by operating (tapping, for example) the power button Bc without pressing the brake pedal, and can activate both the accessory power supply unit 301a and the system power supply unit 301b and activate the drive unit 401 to start the vehicle by operating the power button Bc while pressing the brake pedal.

When the driver operates the power button Bc to turn on the power supply, the home screen 3 displayed on the mobile terminal M changes from a state before power-on, which is shown in Fig. 8(a), to a state after power-on, which is shown in Fig. 8(b).

In the state after power-on, the power button Bc is more visually markedly displayed than in the state before power-on (the power button in this state is denoted as a power button Bc'). For example, the power button Bc' is displayed in a different color or emits light of a different color than the power button Bc in the state before power-on.

After that, the driver can turn off the power supply and stop the vehicle by operating the power button Bc' on the home screen 3 shown in Fig. 8(b) again. When the power supply is turned off, the screen of the display D changes to the home screen 3 shown in Fig. 8(a).

After the power supply is turned off, when the driver gets out of the vehicle and operates the door locking button Ba1, the driver authorization is released, and the screen on the display D changes to the home screen 1 shown in Fig. 7(a).

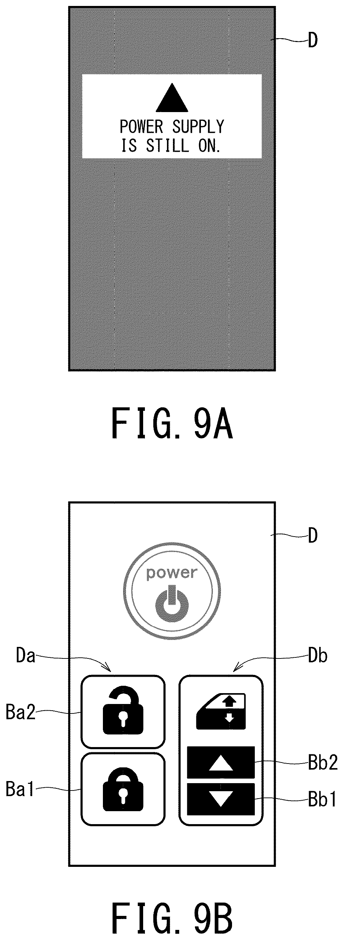

If the driver gets out of the vehicle without turning off the power supply, that is, while the power supply is in the on state, and operates the door locking button Ba1 or goes out of the start area A2, the screen displayed on the mobile terminal M changes from the home screen 3 to a power supply alert screen. Fig. 9 illustrates the power supply alert screen.

On the power supply alert screen, a message is displayed to alert the driver or other occupant with the mobile terminal M to the fact that the power supply is still in the on state. For example, the message is as follows:
"POWER SUPPLY IS STILL ON."

On the other hand, when the driver operates the power supply switch 201 to turn on the power supply after the digital key or vehicle key R is authenticated, the screen displayed on the mobile terminal M having obtained driver authorization changes from the home screen 3 to an authorization-suspended screen. Fig. 9(b) illustrates the authorization-suspended screen. Once the screen has changed to the authorization-suspended screen, output of key operation signals based on the power supply state transition permission and the vehicle start permission is prohibited.

In the authorization-suspended screen, the power button Bc may be hidden from view on the display D so that the power button Bc cannot be operated, or the power button Bc may be still displayed on the display D but be made inoperable.

In the former case, the power button Bc is hidden from view on the display D, and an alternative item is displayed, or the upper half region of the display D in which the power button Bc is displayed or the whole of the display D may be grayed out. In the latter case, as shown in Fig. 9(b), the power button Bc continues being displayed in a faint color so that only the presence thereof can be visually recognized.

The prohibition of output of key operation signals may be implemented only when the driver operates the power button Bc while pressing the brake pedal, that is, only when the driver not only turns on the power supply but also starts the vehicle. When the driver operates the power button Bc without pressing the brake pedal, that is, when the driver activates only the accessory power supply unit 301a, output of key operation signals is not prohibited, and the state where the vehicle can be started with the digital key is maintained.

### (Digital Key Control)

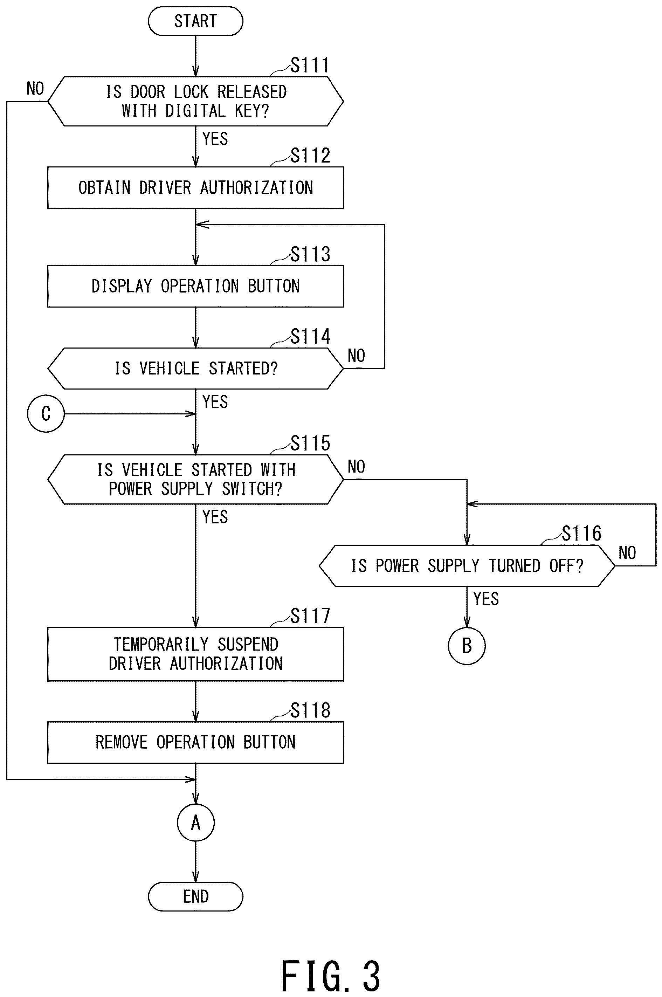

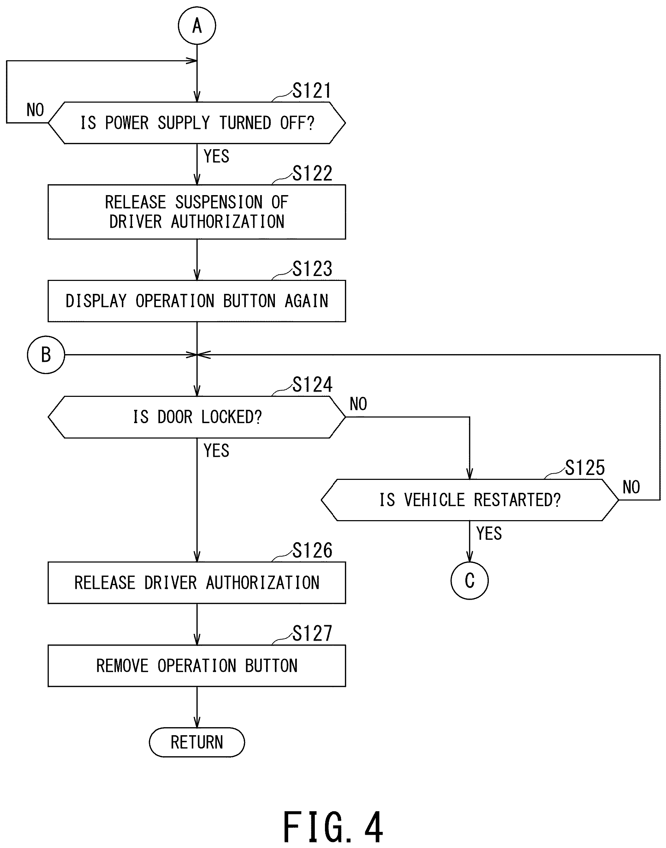

With reference to the flowcharts of Figs. 3 and 4, a digital key control will be described below. Fig. 3 shows details of a control at the time when the power supply is in the on state, and Fig. 4 shows details of a control at the time when the power supply is in the off state.

In this embodiment, the digital key control is implemented by the mobile terminal M. This is not intended to be limiting, and the digital key control may be implemented by the mobile terminal M and the controller 101.

### (Control when Power Supply is On)

In the flowchart of Fig. 3, in S111, whether a key operation signal that indicates to release the door lock has been output to the controller 101 is determined. In other words, whether the door lock has been released with the digital key (mobile terminal M) is determined. When the key operation signal that indicates to release the door lock has been output, the process proceeds to S112. Otherwise, specifically, when the door lock has been released with the vehicle key R, the process proceeds to S121 in the flowchart of Fig. 4.

In S112, driver authorization is obtained. As described earlier, the mobile terminal M that obtains driver authorization is the mobile terminal M that has output the key operation signal that indicates to release the door lock. For example, driver authorization is obtained on the condition that vehicle information including information about the obtaining status of driver authorization is received from the controller 101 and there is no other mobile terminal M that has obtained driver authorization.

In S113, the screen on the display D of the mobile terminal M changes to the home screen 3 shown in Fig. 8(a), and the power button Bc is displayed on the display D.

In S114, whether the vehicle is started is determined. This determination can also be made by extracting information about the activation status of the drive unit 401 from the vehicle information. When the vehicle is started, the process proceeds to S115. When the vehicle is not started, the process returns to S113, and the processing in S113 and S114 is repeated until the vehicle is started.

In S115, whether the vehicle is started with the power supply switch 201 or, in other words, whether the vehicle is started based on the authentication of the digital key or vehicle key R is determined. When the vehicle is started with the power supply switch 201, the process proceeds to S117. Otherwise, specifically, when the vehicle is started with the digital key (mobile terminal M), the process proceeds to S116.

In S116, whether the power supply is turned off is determined. In this case, the power supply may be turned off with the power supply switch 201 or with the digital key (mobile terminal M). When the power supply is turned off, the process proceeds to S124 in the flowchart of Fig. 4. When the power supply is not turned off, the process waits until the power supply is turned off.

In S117, the driver authorization obtained in the processing in S112 is temporarily suspended.

In S118, the operation button involved with the output of the key operation signal that indicates to turn on or off the power supply, which is the operable power button Bc in this embodiment, is removed from the display D. Specifically, the screen on the display D changes to the authorization-suspended screen shown in Fig. 9(b). The power button Bc displayed may be replaced with another item.

### (Control when Power Supply is Off)

In the flowchart shown in Fig. 4, in S121, whether the power supply is turned off is determined. In this case, as in S116, the power supply can be turned off with the power supply switch 201 or with the digital key (mobile terminal M). When the power supply is turned off, the process proceeds to S122. When the power supply is not turned off, the process waits until the power supply is turned off.

In S122, the suspension of the driver authorization is released.

In S123, the power button Bc removed in the processing in S118 is displayed on the display D again so that the power button Bc can be operated. This enables the mobile terminal M to output the key operation signal that indicates to turn on or off the power supply.

In S124, whether the door is locked is determined. In this case, the door may be locked with the digital key (mobile terminal M) or with the vehicle key R. When the door lock is released, the process proceeds to S126. When the door lock is not released, the process proceeds to S125.

In S125, whether the vehicle is started again is determined. When the vehicle is started again, the process proceeds to S115 in the flowchart of Fig. 3. When the vehicle is not started again, that is, when the vehicle continues being stopped, the process returns to S124, and the processing in S124 and S125 is repeated until the door is locked or the vehicle is started again.

In S126, the driver authorization is released. As a result, any mobile terminal M does not have driver authorization again.

In S127, the power button Bc is removed from the display D. In this embodiment, the screen on the display D of the mobile terminal M changes to the home screen 1 shown in Fig. 7(a).

### (Description of Operations and Effects)

The electronic key system 1 according to this embodiment has the configuration described above. In the following, effects achieved by this embodiment will be described.

First, in a situation where the mobile terminal M assigned with a digital key and the vehicle key R are located in the vehicle, when the driver turns on the power supply of the vehicle with the power supply switch 201, the mobile terminal M is prohibited from outputting a key operation signal that turns on or off the power supply.

Therefore, during driving of the vehicle, the power supply can be prevented from being turned off regardless of the intention of the driver or at a timing that is not expected by the driver because of a passenger operating the mobile terminal M of the passenger.

Second, the mobile terminal M can obtain driver authorization concerning turning on and off of the power supply and start of the vehicle, and the mobile terminal M can output a key operation signal that turns on or off the power supply only when the mobile terminal M has the driver authorization.

Therefore, when a plurality of mobile terminals M are assigned with a digital key, a confused situation can be prevented in which key operation signals output from the plurality of mobile terminals M are mixed up.

Third, when the driver turns on the power supply with the power supply switch 201, the driver authorization granted to the mobile terminal M is temporarily released, thereby prohibiting the mobile terminal M from outputting a key operation signal that turns on or off the power supply.

Therefore, output of the key operation signal can be prohibited with a simple arrangement.

Fourth, when the controller 101 receives a key operation signal that unlocks the door of the vehicle, that is, a key operation signal that indicates to unlock the door from the mobile terminal M, the door lock is released, and driver authorization is granted to the mobile terminal M that has output the key operation signal.

Therefore, when a plurality of mobile terminals M are assigned with a digital key, driver authorization can be granted to only one appropriate mobile terminal M, and the power supply can be effectively prevented from being turned on and off at a timing that is not expected by the driver, or the vehicle can be effectively prevented from being started at a timing that is not expected by the driver.

Fifth, when the door is locked with the digital key (mobile terminal M) or vehicle key R after the power supply is turned off, the controller 101 releases the driver authorization granted to the mobile terminal M.

Therefore, when the vehicle is used next time (that is, in the next driving), driver authorization can be granted to an appropriate occupant, and the power supply can be prevented from being turned on and off at a timing that is not expected by the driver, or the vehicle can be prevented from being started at a timing that is not expected by the driver.

Sixth, when the driver turns on the power supply with the power supply switch 201, the mobile terminal M is prohibited from displaying a screen involved with turning off of the power supply.

Therefore, the driver or occupant who is the owner of the mobile terminal M can easily recognize that the driver or occupant is in a situation where the driver or occupant cannot turn off the power supply with the digital key (mobile terminal M).

Seventh, the power supply switch 201 is a push start switch, and when both the digital key (mobile terminal M) and the vehicle key R are located in a key detection range relating to the authentication at the time of push start with the power supply switch 201, the mobile terminal M is prohibited from outputting a key operation signal.

Therefore, the intention of the driver to turn on or off the power supply with the push start switch can be inferred, and the digital key can be prohibited from turning off the power supply so that the power supply can be prevented from being shut down at a timing that is not expected by the driver.

Eighth, after the power supply is turned on, when the driver turns off the power supply with the power supply switch 201, the mobile terminal M is permitted to output a key operation signal.

Therefore, after the power supply is turned off, the inconvenience due to the digital key (mobile terminal M) continuing being prohibited from outputting a key operation signal that turns on the power supply can be avoided.

In addition, the occupant who has the mobile terminal M can use any of the power supply switch 201 and the digital key to power on the power supply again or start the vehicle again.

For example, when a passenger with the mobile terminal M takes over driving from the driver with the vehicle key R, the passenger (that is, the new driver) can turn on the power supply with the mobile terminal M of the passenger and therefore does not need to receive the vehicle key R from the former driver, so that the takeover can be smoothly carried out.

In the above description, the mobile terminal M assigned with a digital key receives vehicle information from the controller 101 to grasp the obtaining status of driver authorization and then obtains driver authorization. The obtaining of driver authorization is not limited to this, and the controller 101 may grant driver authorization to the mobile terminal M.

For example, in a situation where there is no mobile terminal M to which driver authorization has been granted, and all doors are locked, that is, in a situation where the door of the vehicle is locked, the controller 101 transmits a signal for granting driver authorization to the first mobile terminal M to output a key operation signal that indicates to release the door lock to get into the vehicle.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

- 1: electronic key system
- 101: digital key controller (controller)
- M: smartphone (mobile terminal)
- R: remote key (vehicle key)
- 201: power supply switch
- 202: brake switch
- 301: power supply unit
- 301a: accessory power supply unit
- 301b: system power supply unit
- 401: drive unit
- 501: door lock unit

## Claims

1. An electronic key system (1) for a vehicle, comprising:
a mobile terminal (M) that outputs a key operation signal corresponding with a key permission of a digital key;
a vehicle key (R) portable by a driver;
a power supply switch (201) that is provided at a driver's seat and is configured to implement a power supply state transition operation on the vehicle under authentication of either the digital key or the vehicle key (R); and
a controller (101) that turns on or off a power supply of the vehicle in response to the power supply state transition operation or in response to receiving the key operation signal,
wherein, when the driver turns on the power supply using the power supply switch (201), the mobile terminal (M) is prohibited from turning the power supply on or off.

2. The electronic key system (1) for a vehicle according to claim 1, wherein the mobile terminal (M) is prohibited from turning on or off by prohibiting the mobile terminal (M) from outputting a key operation signal that turns on or off the power supply or prohibiting the controller (101) from receiving the key operation signal.

3. The electronic key system (1) for a vehicle according to claim 1 or 2, wherein the mobile terminal (M) is configured to:
obtain authorization concerning turning on or off of the power supply; and
output the key operation signal that turns on or off the power supply only when the mobile terminal (M) has obtained the authorization.

4. The electronic key system (1) for a vehicle according to claim 3, wherein the mobile terminal (M) is configured such that, after obtaining the authorization, when the driver turns on the power supply using the power supply switch (201), the authorization is cancelled, and the mobile terminal (M) is prohibited from outputting the key operation signal.

5. The electronic key system (1) for a vehicle according to claim 3 or 4, wherein the mobile terminal (M) is further configured to:
output a key operation signal that unlocks or locks a door of the vehicle; and
obtain the authorization when the mobile terminal (M) has output the key operation signal that unlocks the door.

6. The electronic key system (1) for a vehicle according to any one of claims 3 to 5, wherein the mobile terminal (M) is configured to release the authorization when the door is locked after the power supply is turned off.

7. The electronic key system (1) for a vehicle according to any one of claims 1 to 6, wherein the controller (101) is further configured to start the vehicle in response to the power supply being turned on.

8. The electronic key system (1) for a vehicle according to any one of claims 1 to 7, wherein the mobile terminal (M) displays a screen for key operation and is configured to output the key operation signal according to an operation on the screen, and
the mobile terminal (M) is prohibited from displaying a screen involved with turning off of the power supply when the driver turns on the power supply using the power supply switch (201).

9. The electronic key system (1) for a vehicle according to any one of claims 1 to 8, wherein the power supply switch (201) is a push start switch, and
the mobile terminal (M) is prohibited from turning on or off the power supply when both the mobile terminal (M) and the vehicle key (R) are located in a key detection range relating to the authentication at a time of push start with the power supply switch (201).

10. The electronic key system (1) for a vehicle according to any one of claims 1 to 9, wherein after the power supply is turned on, when the driver turns off the power supply using the power supply switch (201), the mobile terminal (M) is permitted to turn on or off the power supply.
